# EUROPEAN PATENT APPLICATION

(11) **EP 4 388 944 A1**
(43) Date of publication of application: **26.06.2024**
(21) Application number: 22216006.1
(22) Date of filing: 22.12.2022
(51) Int. Cl.: A47J 27/21, A47B 77/08

(54) **WATER HEATING AND SANITIZING DEVICES FOR COUNTERTOP INSTALLATION AND COUNTERTOP ARRANGEMENT FOR USE IN A KITCHEN**

(71) Applicant: Faber S.p.A., 60044 Fabriano (Ancona) (IT)
(72) Inventor: GASPARINI, Alberto, 60044 Fabriano (AN) (IT); VANTAGGI, Ermanno, 06022 Fossato di Vico (PG) (IT)
(74) Representative: LBP Lemcke, Brommer & Partner Patentanwälte mbB

(57) **Abstract**

We describe a water heating device for countertop installation, comprising: a metal sink basin (6a) for installation in a countertop (3), said sink basin (6a) having a water inlet (6b) and a water outlet (6c); and an electric heating device attached to a wall of the sink basin (6a) on an outside thereof for heating water contained inside the sink basin (6a). We also describe a sanitizing device for countertop installation, comprising: a basin (6a) for installation in a countertop (3), said basin preferably having a water inlet (6b) and a water outlet (6c); and a lid (7) designed to close off an opening of the basin (6a); wherein the sanitizing device further comprises, preferably in or on said lid (7), at least one ultraviolet, UV, lamp for irradiating an inside of the basin (6a) with UV radiation, preferably UVA radiation in a wavelength range from 285 nm to 410 nm. Preferably, these two devices are integrated into a single entity and at least share a common basin or sink basin (6a) and more preferably also share a common control unit (11) and/or user interface (10) for controlling their respective operations. They can be arranged in a countertop (3) in vicinity of a regular sink (2a) and connected to this sink's fresh water supply and sewer line (4), respectively.

## Description

The invention relates to a water heating device for countertop installation according to claim 1.

The invention also relates to a first countertop arrangement for use in a kitchen according to claim 10, which first countertop arrangement includes said water heating device.

The invention further relates to a sanitizing device for countertop installation according to claim 11.

The invention finally relates to a second countertop arrangement for use in a kitchen according to claim 16, which second countertop arrangement includes said water heating device and said sanitizing device.

Kitchen work, e.g., cooking, may include preparing food by means of steam cooking or other cooking methods such as sous-vide cooking, which take place at different temperatures.

Steam cannot only be used for cooking, but also for cleaning and sterilizing of kitchen utensils, e.g., knifes or chopping boards (without limitation).

Another way of sterilizing not only kitchen utensils but also foodstuff, e.g., fruit or vegetables, relies on irradiating same with UV (ultraviolet) radiation, preferably UVA radiation.

While all of these methods are highly advantageous, they typically require special separate equipment, e.g., a steam cooker, that can be space-consuming, cumbersome to use or to store and retrieve, or unattractive to look at when not in use.

The invention strives to overcome these disadvantages by providing a water heating device, a sanitizing device as well as first and second countertop arrangements including such devices which are easy to use, without requiring any storage or retrieval, while remaining esthetically attractive even when not in use.

These objects are achieved by means of a water heating device for countertop installation according to claim 1, by means of a first countertop arrangement for use in a kitchen according to claim 10, which first countertop arrangement includes said water heating device, by means of a sanitizing device for countertop installation according to claim 11, and by means of a second countertop arrangement for use in a kitchen according to claim 16, which second countertop arrangement includes said water heating device and said sanitizing device.

Advantageous further embodiments are defined in the dependent claims.

According to a first aspect of the invention, a water heating device for countertop installation comprises:
a metal sink basin for installation in a countertop, said sink basin having a water inlet and a water outlet; and
an electric heating device attached to a wall of the sink basin on an outside thereof for heating water contained inside the sink basin.

The heating device can comprise a thick film electric heating element with nominal power of 900 W operating at 110 V or 230 V (without limitation).

According to a second aspect of the invention, a countertop arrangement for use in a kitchen comprises:
a countertop;
a sink installation with a first sink basin installed in said countertop and with a fresh water supply to said first sink basin as well as a used water drain from said first sink basin;
a water heating device according to said first aspect of the invention including a second sink basin installed in said countertop in vicinity of said first sink basin;
wherein preferably the water inlet of said second sink basin is fluidically connected to said fresh water supply and the water outlet of said second sink basin is fluidically connected to said used water drain.

According to a third aspect of the invention, a sanitizing device for countertop installation, comprising:
a basin for installation in a countertop, said basin preferably having a water inlet and a water outlet; and
a lid designed to close off an opening of the basin;
wherein the sanitizing device further comprises, preferably in or on said lid, at least one ultraviolet, UV, lamp for irradiating an inside of the basin with UV radiation, preferably UVA radiation in a wavelength range from 285 nm to 410 nm.

According to a fourth aspect of the invention, a countertop arrangement for use in a kitchen comprises:
a countertop;
a sink installation with a first sink basin installed in said countertop and with a fresh water supply to said first sink basin as well as a used water drain from said first sink basin;
a water heating device according to said first aspect of the invention including a second sink basin installed in said countertop in vicinity of said first sink basin; and a sanitizing device according to said third aspect of the invention;
wherein preferably the water inlet of said second sink basin is fluidically connected to said fresh water supply and the water outlet of said second sink basin is fluidically connected to said used water drain; and
more preferably the water heating device and the sanitizing device at least share a common basin or sink basin in the form of said second sink basin and most preferably also share a common control unit and/or user interface.

In is also possible to modify said countertop arrangement according to said fourth aspect of the invention by providing only the sanitizing device according to said third aspect of the invention without the water heating device according to said first aspect of the invention.

In this way, the invention provides a water heating device for cooking and/or sterilizing that can be (or is) integrated in a countertop as an add-on module in the manner of a built-in sink so that it does not have to be stored away or retrieved an may visually "vanish" while not in use.

The same holds for the UV sanitizing device provided in the context of the present invention.

The above-mentioned UVA radiation in a wavelength range from 285 nm to 410 nm has proven particularly efficient for the intended effect.

If the UV lamp (or generally a UV source) is located in or on said lid, one can ensure that the user can only operate the device when the lid is in place which provides additional user safety.

The UV lamp can be devised in the form of at least one, preferably two, LED bar/s operated at low voltage, i.e., less than 230 V, e.g., 12/24 V (max. 15 W).

While both said devices may be devised as separate devices, a highly advantageous synergetic effect is obtained when both devices are combined into a single device, wherein preferably the water heating device and the sanitizing device at least share a common basin or sink basin in the form of said second sink basin and most preferably also share a common control unit and/or user interface. The same holds for any electrical power line connection required for operating both the water heating device and the sanitizing device, which is not explicitly mentioned in the present description.

Moreover, the water heating device according to said first aspect of the invention can be connected to a water supply and drain installation of a regular sink, wherein preferably the water inlet of the device's sink basin is fluidically connected to a fresh water supply of the regular sink and the water outlet of the device's sink basin is fluidically connected to a used water drain of the regular sink. This makes using the water heating device much easier because it does not require filling under a tab or by means of a separate container, as is the case with usual steam cookers etc.

In a further embodiment of the water heating device according to the invention, the water inlet is located in a side wall of the sink basin.

This makes filling the device particularly easy. Furthermore, no additional tabs or the like are visible above the countertop.

In a further embodiment of the water heating device according to the invention, the electric heating device is located under a bottom wall of the sink basin.

In this way, efficient heating of the water inside the sink basin can be achieved.

In a further embodiment of the water heating device according to the invention, the device further comprises a valve member and/or a water pressure regulating member in fluid connection with the water inlet, wherein preferably the valve member has a user control function for controlling a water supply to the water heating device.

In this way, water flow into the sink basin can be controlled (by a user) independently from a water flow into a regular sink basin, if the device is connected to the same water supply system as the regular sink.

In a further embodiment of the water heating device according to the invention, the device further comprises:
a temperature sensor for measuring a water temperature inside the sink basin; and
a control unit with a user interface for controlling an operation of the water heating device, said control unit in operative connection with said temperature sensor and said user interface preferably designed to selectively choose from at least
   a) a steam generating mode in which the water heating device is devised to generate steam for steam cooking and/or steam sterilization;
   b) a water heating mode for lower temperature cooking at less than 100 °C, e.g., sous-vide cooking;
   wherein the user interface preferably also controls the valve member with back-reference to claim 4 in order to provide water to the sink basin.

In this way, the user may decide whether he or she wants to use the device for steam cooking, slow cooking or for sterilization, which makes the device more versatile.

In a further embodiment of the water heating device according to the invention, the user interface is located on an upper side of the sink basin, which is visible from above a countertop when the water heating device is installed in the countertop, preferably located in or adjacent a peripheral rim of the sink basin, the user interface most preferably including a touch-sensitive control interface which is preferably a transparent cover element, e.g., glass cover.

This makes operation of the device particularly easy for the user while at the same time providing protection of the interface from potentially harmful substances, e.g., (hot) water or foodstuffs.

In a further embodiment of the water heating device according to the invention, the device further comprises: at least one tray member for insertion in the sink basin, and preferably also a tray support member for insertion in the sink basin, said tray support member devised for distancing said tray member from a bottom wall of the sink basin and/or for distancing one tray member from another tray member, said tray member/s preferably having holes or openings for letting pass water or steam therethrough.

Such tray members allow to place objects and/or foodstuff in the hot water or steam for perfect immersion and to take them out again after the cooking or treatment. The use of a tray support member enables the user to stack several tray members and to use the available space inside the device more efficiently.

The tray member and/or the tray support member is/are preferably made of (stainless) steel.

In a further embodiment of the water heating device according to the invention, the device further comprises a lid designed to hermetically close off an opening of the sink basin, preferably also after insertion of the tray member/s and/or tray support member. This lid can have a peripheral gasket that guarantees the sealing of the steam generated by the system.

This enables to keep heat and/or steam inside the device, thus making it more efficient and more economic in use.

In a further embodiment of the water heating device according to the invention, the lid (or a dedicated part thereof) cooperates with an electric switch member or contact member located in an edge region of the sink basin, preferably for enabling the above-mentioned control unit and/or the user interface only when the lid is correctly placed on the sink basin.

This can provide additional safety and/or economies in use, because the device can only be operated when the lid is closed.

In a further embodiment of the sanitizing device according to the invention, the lid is non-transparent for the UV radiation, e.g., made from metal or from a suitable glass material.

This further enhances operational safety, as already mentioned further up.

In a further embodiment of the sanitizing device according to the invention, the lid cooperates with an electric switch member or contact member located in an edge region of the basin for enabling activation of the UV lamp only when the lid is correctly placed on the basin.

In a further embodiment of the sanitizing device according to the invention, the device further comprises:
a control unit with a user interface for controlling an operation of the sanitizing device, said control unit preferably in operative connection with the above-mentioned electric switch member or contact member and further in operative connection with said user interface designed to selectively choose from at least
a) an active UV radiation generating mode ("on") in which the sanitizing device is devised to generate UV radiation for sterilization;
b) an inactive UV radiation generating mode ("off") in which the sanitizing device does not generate UV radiation for sterilization;
wherein preferably the user interface is located on an upper side of the basin, which is visible from above a countertop when the sanitizing device is installed in the countertop, preferably located in or adjacent a peripheral rim of the basin, the user interface most preferably including a touch-sensitive control interface which is preferably a transparent cover element, e.g., glass cover.

As already stated, this can make operation of the device particularly easy for the user while providing protection of the interface from potentially harmful substances, e.g., (hot) water or foodstuffs.

The user interface mentioned herein can serve for the management of automatic (cooking or sterilization) cycles and manual on-off functions of the valve member (e.g., a solenoid valve) and the UV lamp (e.g., a LED UVA light).

Exemplary cycles may include:
1) UVA sanitization cycle:
   Manual switching on of the integrated LED lights on the lid with automatic switching off after, e.g., 30' in case the LED lights are not manually switched off before.
2) Lower temperature cooking cycle:
   Cooking cycle at 65 °C (cycle time 180')
   Heating element 900 W: on/off operated by electronic probe (temperature sensor) following the cycle cooking temperature;
   Solenoid valve: manual activation for loading required amount of water via release button.
3) Steam cycle
   a) Steam cycle 45'
      Heating element 900 W: ON 45';
      Solenoid valve: ON 17" - OFF 240".
   b) Steam cycle 75'
      Heating element 900 W: ON 75';
      Solenoid valve: ON 17" - OFF 240".

In a further embodiment of the sanitizing device according to the invention, the sanitizing device further incorporates the water heating device according to said first aspect of the invention, preferably by providing a shared basin or sink basin for the sanitizing device and for the water heating device and by also providing a shared control unit and/or user interface for the sanitizing device and for the water heating device. This is a most preferred, highly synergetic embodiment.

This can also apply to the lid and or the electric switch member mentioned before, which can be the same for both the water heating device and the sanitizing device, which reduces the number of required parts.

Further characteristics and advantages of the invention will become apparent from the following description of exemplary embodiments based on the appended drawings.
Figure 1 shows an overall view of a countertop arrangement according to the invention;
Figure 2 shows the countertop arrangement of Figure 1 from the different perspective;
Figure 3 shows a water heating device according to the invention in an exploded view;
Figure 4 shows the water heating device of Figure 3 in its built-in state;
Figure 5 shows the water heating device of Figure 3 together with different accessories;
Figure 6 shows a sectional view of the water heating device of Figure 3 with its accessories;
Figure 7 shows a lid for a combined water heating device and the sanitizing device comprising in the embodiment of Figure 1;
Figure 8 shows the lid of Figure 7 from a different perspective;
Figure 9 shows the lid of Figure 7 in an exploded view;
Figure 10 shows details of the lid in Figure 7;
Figure 11 shows further details of the lid in Figure 7;
Figure 12 shows a detail of a sink basin region for receiving the lid of Figure 7;
Figure 13 illustrates an interaction of the lid of Figure 7 and the sink basin;
Figure 14 shows a detailed view of the arrangement in Figure 1; and
Figure 15 shows a user interface and control unit as comprised in the arrangement in Figure 1 or Figure 14.

In all of the drawings, same reference numerals indicate same elements or elements having a common function.

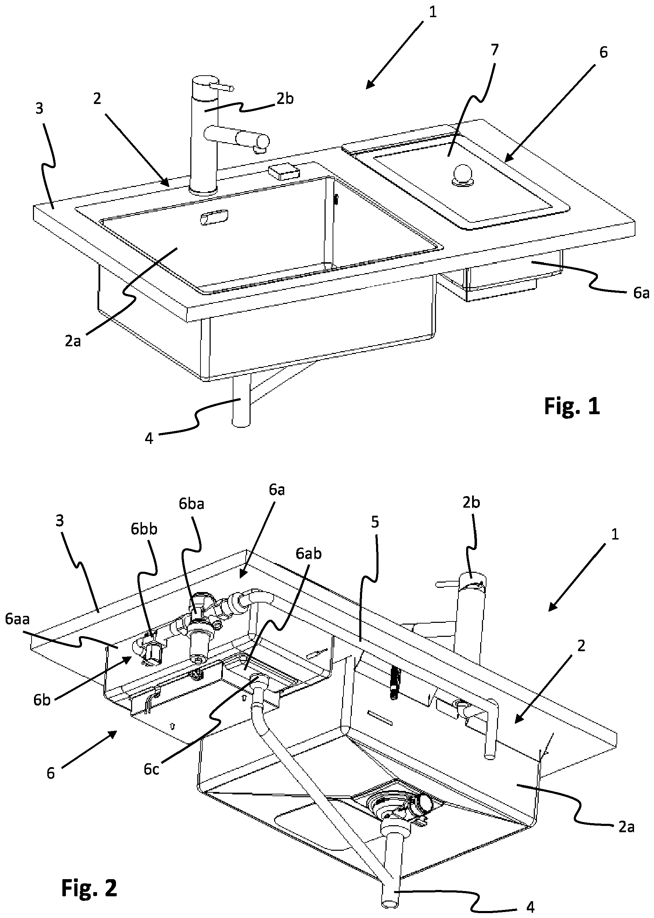

Figure 1 shows a countertop arrangement 1 according to the invention, which arrangement comprises a regular sink 2 having a sink basin 2a and a tab 2b installed in/on a countertop 3. The sink basin 2a has a drain 2c that is connected to a sewer pipe 4, and the tab 2b is connected to a fresh water supply via a fresh water supply line 5, cf. Figure 2. The sink 2 is obviously not limited to the shown model.

In a vicinity of sink 2, an add-on module 6 is installed in/on the countertop 3, which add-on module 6 comprises both the water heating device and the sanitizing device according to the present invention. However, in principle, these devices could be separate and installed as a plurality of distinct add-on modules (not shown).

As can be seen from Figure 2, add-on module 6 comprises a (sink) basin 6a having a water inlet 6b in a side wall 6aa connected to the fresh water supply line 5 via a pressure regulator (water pressure regulating member) 6ba and a solenoid valve (valve member) 6bb as well as a water outlet or drain 6c in a bottom wall 6ab connected to sewer pipe 4. If the valve member 6bb is opened, water will flow into the sink basin 6a. Preferably, drain 6c will then be closed. Add-on module 6 further comprises a lid 7 (Figure 1) for hermetically closing an opening of the sink basin 6a.

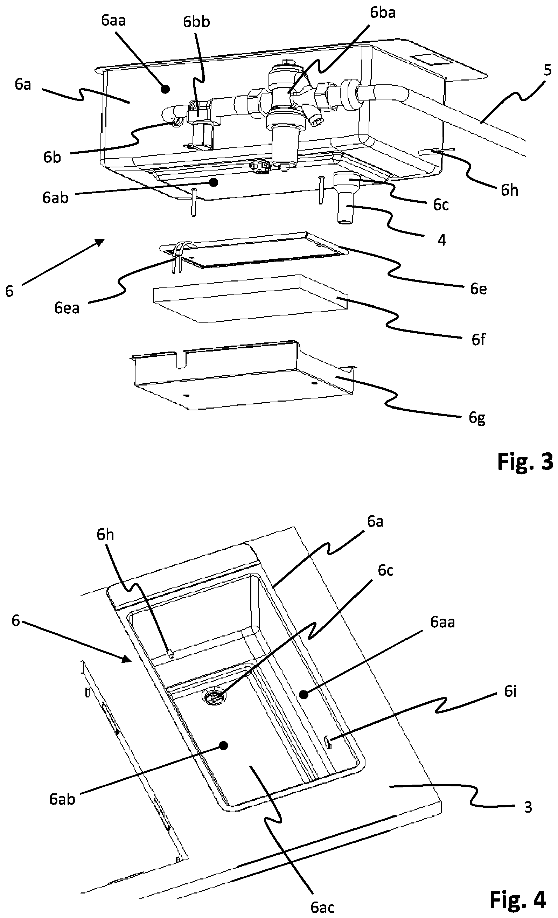

Figure 3 shows the isolated add-on module 6 of Figures 1 and 2 in an exploded view. An electric heating device 6e (with electrical connectors 6ea) is attached to an underside of the bottom wall 6ab of the sink basin 6a and covered by a ceramic thermal insulation 6f and a metallic cover 6g. Reference numeral 6h denotes said temperature sensor or probe and reference numeral 6i (cf. Figure 4) denotes a water supply nozzle as part of water inlet 6b. Heating device 6e can heat water contained in the sink basin 6a in order to produce hot water and/or steam.

The sink basin 6a can have, in its bottom wall 6ab a deep-drawn water containment area 6ac (cf. Figure 4), in which area the drain 6c is located. Preferentially, the electric heating device 6e is located underneath this deep-drawn water containment area 6ac.

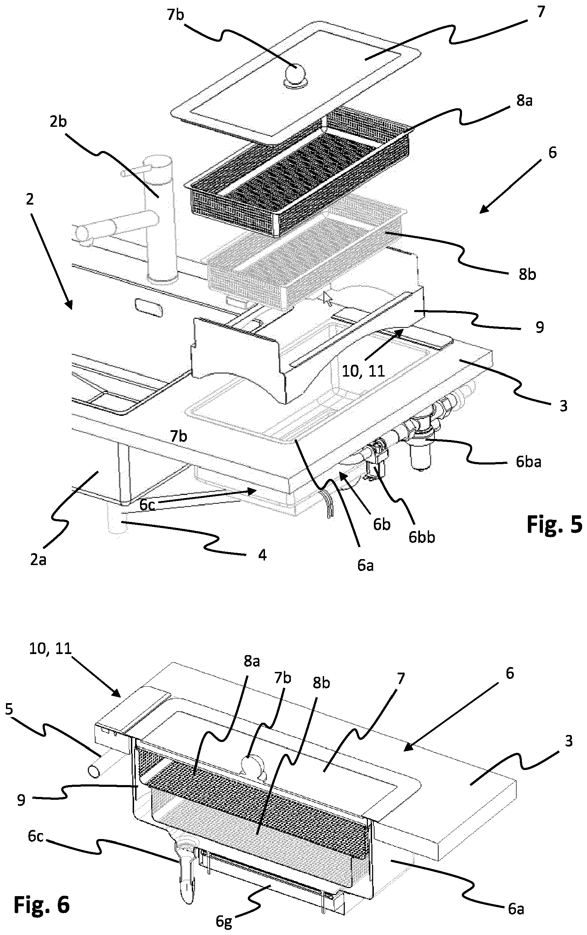

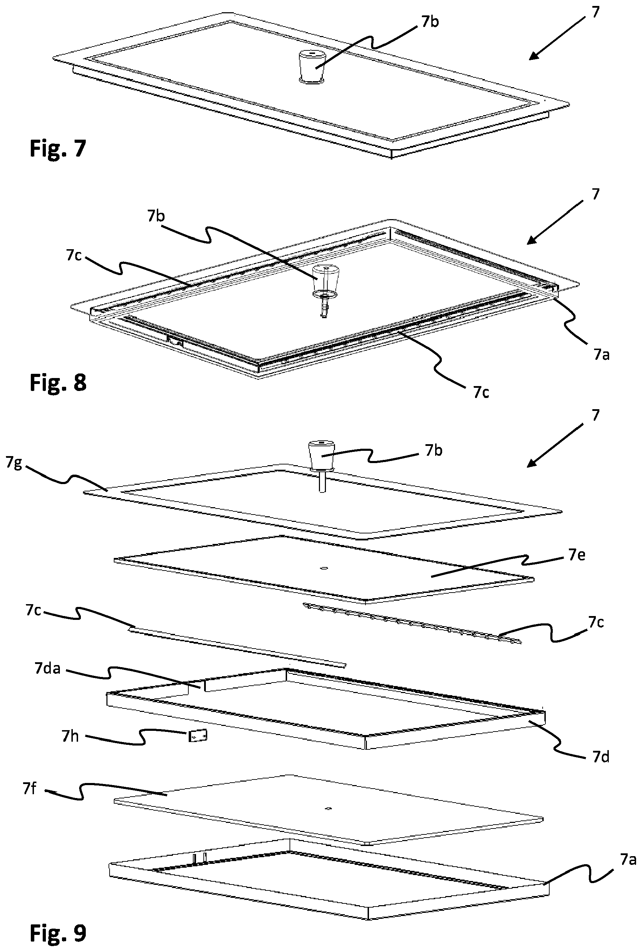

Figure 5 shows various accessories of add-on module 6. Reference numeral 7 denotes the lid mentioned earlier. Said lid 7 has a circumferential gasket 7a (cf. Figure 9) for sealing the steam generated by the system and a handle or knob 7b for handling by a user. Reference numerals 8a and 8b denote perforated steel trays (tray members) which can hold items to be sterilized or foodstuff to be cooked. Tray support member 9 serves stack a plurality of trays 8a, 8b without them touching each other, as can be gathered form the sectional view in Figure 6.

Figures 7 through 9 shown the lid 7 in more detail, Figure 9 being an exploded view thereof.

As can be seen from Figures 8 and 9, lid 7 includes a UV light source devised in the form of two UVA LED bars 7c that are arranged at the longer sides of rectangular lid frame 7d between two glass panels, i.e., upper glass panel 7e and lower glass panel 7f, wherein upper glass panel 7e is preferably opaque to the UV radiation generated by UVA LED bars 7c. Knob 7b is fixed on upper glass panel 7e and lower glass panel 7f. Lid 7 further comprises a flat rectangular cover frame 7g which is intended to abut an upper circumferential edge of sink basin 6a, cf. for instance Figure 6.

As can be seen from Figure 9, lid frame 7d has a notch 7da in one of its shorter sides, which notch 7da holds an electric contact or switch member 7h in operative (electric) connection with LED bars 7c via lid frame 7d (connection not shown). Gasket 7a has a corresponding structure at reference numeral 7aa for to accommodate electric contact member 7h.

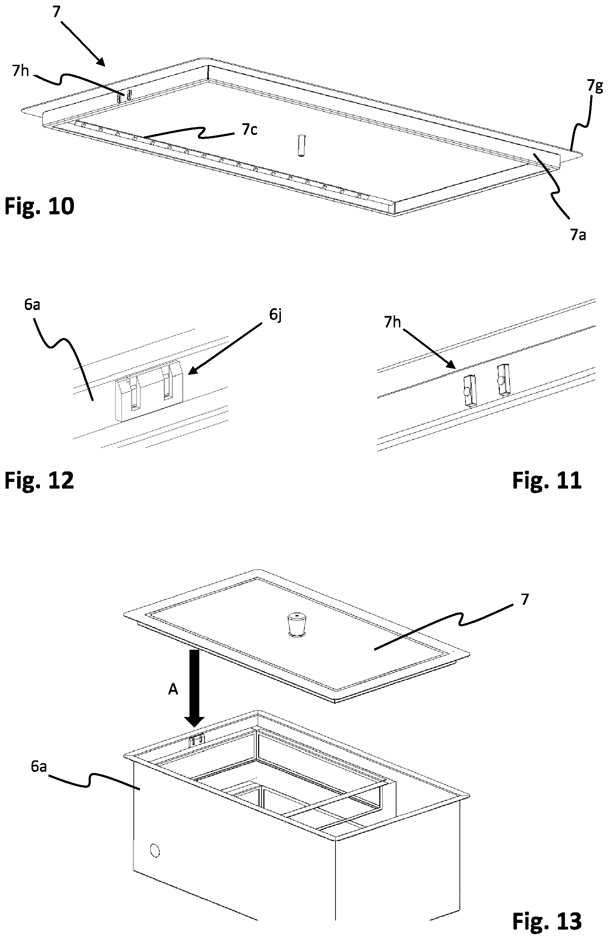

Figure 10 provides another view of lid 7, and Figure 11 provides another (detailed) view of electric contact member 7h, which can be qualified as male contact member.

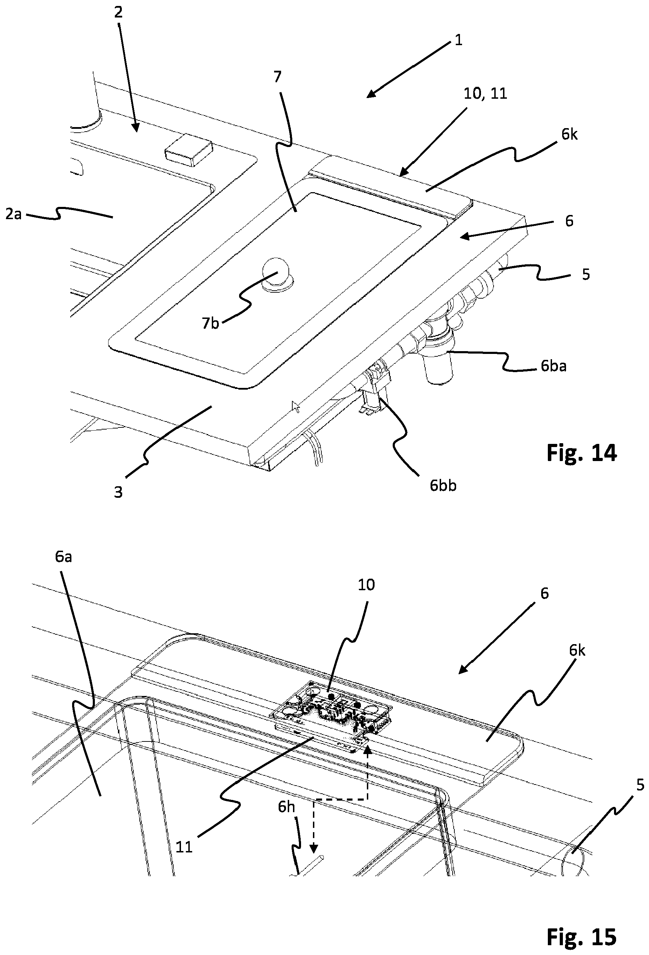

Figure 12 shows a corresponding, i.e., complementary (female) electric contact member 6j located at an upper edge inside sink basin 6a. When the lid 7 is correctly placed on sink basin 6a, cf. Figure 6 or Figure 13 (arrow A) or Figure 14, electric contact members 6j and 7h make contact so that electric current can flow via said electric contact members 6j and 7h to LED bars 7c.

To this end, add-on module 6 is preferably connected to an electric power supply (mains), which is not shown in the drawings but evident for any person skilled in the art.

Said electric power supply will also serve to power a user interface and a control unit of said add-on module 6 for controlling a functioning thereof (cf. Figures 14 and 15), including operating the electric heating device 6e (Figure 3), the valve member 6bb (Figure 2), the LED bars 7c (Figure 9) and possibly also the drain 6c (Figure 2).

As shown in Figures 14 and 15, add-on module 6 comprises a glass panel 6k along one of its shorter edges, such that it is easily visible to the user in the installed state of add-on module 6, which glass panel 6k serves to cover and protect a touch-sensitive user interface 10 in operative connection with a control unit 11 for controlling an operation of the add-on module 6, i.e., the water heating device and the sanitizing device in combination. This may involve switching electric heating device 6e (Figure 3), the valve member 6bb (Figure 2), the LED bars 7c (Figure 9) and possibly also the drain 6c (Figure 2) on and off or open and closed, respectively, according to some preset cycle scheme or mode(s). Advantageously, the user interface 10 and the control unit 11 also allow manual operation of the devices by a user and/or changing or re-programming said preset cycle schemes. To this end, the control unit 11 preferably is in operative connection with said temperature sensor 6h, cf. Figure 3 (dashed line in Figure 15). Advantageously, the user interface 10 and the control unit 11 also serve to provide (switch) electric current to electric contact member 6j located at an upper edge inside sink basin 6a in order to produce UV radiation by means of LED bars 7c according to some preset cycle scheme or mode(s), as explained before.

As stated before, the water heating device and the sanitizing device need not be combined in one device but can be constructed as separate entities. However, optimum synergy is obtained when both devices are integrated in one common set-up, including a shared sink basin, a shared interface and control unit, shared power electronics as well as a shared lid that serves to provide the source of UV radiation for the sanitizing feature.

It is within the scope of the invention, however, to realize only one of said devices, i.e., either the water heating device for (steam) cooking and sterilization or the UV sanitizing device.

## Claims

1. A water heating device for countertop installation, comprising:
a metal sink basin (6a) for installation in a countertop (3), said sink basin (6a) having a water inlet (6b) and a water outlet (6c); and
an electric heating device (6e) attached to a wall (6ab) of the sink basin (6a) on an outside thereof for heating water contained inside the sink basin (6a).

2. The water heating device of claim 1, wherein
the water inlet (6b) is located in a side wall (6aa) of the sink basin (6a).

3. The water heating device of claim 1 or 2, wherein
the electric heating device (6e) is located under a bottom wall (6ab) of the sink basin (6a).

4. The water heating device of any one of claims 1 through 3, further comprising:
a valve member (6bb) and/or a water pressure regulating member (6ba) in fluid connection with the water inlet (6b), wherein preferably the valve member (6bb) has a user control function for controlling a water supply to the water heating device.

5. The water heating device of any one of claims 1 through 4, further comprising:
a temperature sensor (6h) for measuring a water temperature inside the sink basin (6a); and
a control unit (11) with a user interface (10) for controlling an operation of the water heating device, said control unit (11) in operative connection with said temperature sensor (6h) and said user interface (10) preferably designed to selectively choose from at least
a) a steam generating mode in which the water heating device is devised to generate steam for steam cooking and/or steam sterilization;
b) a water heating mode for lower temperature cooking at less than 100 °C, e.g., sous-vide cooking;
wherein the user interface (10) preferably also controls the valve member (6bb) with back-reference to claim 4 in order to provide water to the sink basin (6a).

6. The water heating device of claim 5, wherein
the user interface (10) is located on an upper side of the sink basin (6a), which is visible from above a countertop (3) when the water heating device is installed in the countertop (3), preferably located in or adjacent a peripheral rim of the sink basin (6a), the user interface (10) most preferably including a touch-sensitive control interface which is preferably a transparent cover element, e.g., glass cover (6k).

7. The water heating device of any one of claims 1 through 6, further comprising:
at least one tray member (8a, 8b) for insertion in the sink basin (6a), and preferably also a tray support member (9) for insertion in the sink basin (6a), said tray support member (9) devised for distancing said tray member (8a, 8b) from a bottom wall (6ab) of the sink basin (6a) and/or for distancing one tray member (8a) from another tray member (8b), said tray member/s (8a, 8b) preferably having holes or openings for letting pass water or steam therethrough.

8. The water heating device of any one of claims 1 through 7, further comprising:
a lid (7) designed to hermetically close off an opening of the sink basin (6a), preferably also after insertion of the tray member/s (8a, 8b) and/or tray support member (9) according to claim 7.

9. The water heating device of claim 8, wherein
the lid (7) cooperates with an electric switch member or contact member (6j) located in an edge region of the sink basin (6a), with back-reference to claim 5 preferably for enabling the control unit (11) and/or the user interface (10) when the lid (7) is correctly placed on the sink basin (6a).

10. A countertop arrangement (1) for use in a kitchen, comprising:
a countertop (3);
a sink installation (2) with a first sink basin (2a) installed in said countertop (3) and with a fresh water supply (5) to said first sink basin as well as a used water drain (4) from said first sink basin (2a);
a water heating device according to any one of claims 1 through 9 including a second sink basin (6a) installed in said countertop (3) in vicinity of said first sink basin (2a);
wherein preferably the water inlet (6b) of said second sink basin (6a) is fluidically connected to said fresh water supply (5) and the water outlet (6c) of said second sink basin (6a) is fluidically connected to said used water drain (4).

11. A sanitizing device for countertop installation, comprising:
a basin (6a) for installation in a countertop (3), said basin preferably having a water inlet (6b) and a water outlet (6c); and
a lid (7) designed to close off an opening of the basin (6a);
wherein the sanitizing device further comprises, preferably in or on said lid (7), at least one ultraviolet, UV, lamp (7c) for irradiating an inside of the basin (6a) with UV radiation, preferably UVA radiation in a wavelength range from 285 nm to 410 nm.

12. The sanitizing device of claim 11, wherein
the lid (7) is non-transparent for the UV radiation.

13. The sanitizing device of claim 11 or 12, wherein
the lid (7) cooperates with an electric switch member or contact member (6j) located in an edge region of the basin (6a) for enabling activation of the UV lamp (7c) only when the lid (7) is correctly placed on the basin (6a).

14. The sanitizing device of any one of claims 11 through 13, further comprising:
a control unit (11) with a user interface (10) for controlling an operation of the sanitizing device, said control unit (11) preferably in operative connection with the electric switch member or contact member (6j) according to claim 13 and further in operative connection with said user interface (10) designed to selectively choose from at least
a) an active UV radiation generating mode in which the sanitizing device is devised to generate UV radiation for sterilization;
b) an inactive UV radiation generating mode in which the sanitizing device does not generate UV radiation for sterilization;
wherein preferably the user interface (10) is located on an upper side of the basin (6a), which is visible from above a countertop (3) when the sanitizing device is installed in the countertop (3), preferably located in or adjacent a peripheral rim of the basin (6a), the user interface (10) most preferably including a touch-sensitive control interface which is preferably a transparent cover element, e.g., glass cover (6k).

15. The sanitizing device of any one of claims 11 through 14, wherein
the sanitizing device further incorporates the water heating device according to any one of claims 1 through 9, preferably by providing a shared basin or sink basin (6a) for the sanitizing device and for the water heating device and by also providing a shared control unit (11) and/or user interface (10) for the sanitizing device and for the water heating device, in particular with back-reference to claim 5 and claim 14, respectively.

16. A countertop arrangement (1) for use in a kitchen, comprising:
a countertop (3);
a sink installation (2) with a first sink basin (2a) installed in said countertop (3) and with a fresh water supply (5) to said first sink basin (2a) as well as a used water drain (4) from said first sink basin (2a);
a water heating device according to any one of claims 1 through 9 including a second sink basin (6a) installed in said countertop (3) in vicinity of said first sink basin (2a); and
a sanitizing device according to any one of claims 11 through 15;
wherein preferably the water inlet (6b) of said second sink basin (6a) is fluidically connected to said fresh water supply (5) and the water outlet (6c) of said second sink basin (6a) is fluidically connected to said used water drain (4); and
more preferably the water heating device and the sanitizing device at least share a common basin or sink basin in the form of said second sink basin (6a) and most preferably also share a common control unit (11) and/or user interface (10), in particular with back-reference to claim 5 and claim 14, respectively.
